# EUROPEAN PATENT APPLICATION

(11) **EP 4 848 035 A1**
(43) Date of publication of application: **02.12.2026**
(21) Application number: 25869600.4
(22) Date of filing: 16.09.2025
(51) Int. Cl.: G06F 1/18, H05K 5/00, H05K 7/14

(54) **SERVER CHASSIS STRUCTURE AND SERVER**

(30) Priority: 21.03.2025 CN 202510341113
(71) Applicant: Suzhou Metabrain Intelligent Technology Co., Ltd., Suzhou, Jiangsu 215000 (CN)
(72) Inventor: NIU, Zhanlin, Suzhou, Jiangsu 215000 (CN)
(74) Representative: Studio Torta S.p.A.
(86) International application number: PCT/CN2025/121673
(87) International publication number: WO 2026/194181

(57) **Abstract**

Some embodiments of the present invention provide a server case structure and a server. The server case structure includes: a cover plate and a case. The cover plate and the case are fixed by means of snap-fitting and/or riveting; at least one edge of the cover plate protrudes from the case, a protruding portion is a first protruding edge, the first protruding edge is provided with an avoidance groove, and the avoidance groove penetrates through the first protruding edge; and an end portion of the case has a connection region, and the avoidance groove is provided corresponding to the connection region, a width of the avoidance groove not less than a width of the connection region. The present invention implements the rapid disassembly and assembly of the cover plate on the case by using a simple structure. By providing the avoidance groove in the first protruding edge, effective avoidance of external objects such as operating tools, hands, external cables, etc. in the connection region is realized, such that the convenience of follow-up operations of inserting and removing a cable from the server case structure, mounting a device, etc. may be improved. The present disclosure solves the problems of inconvenient disassembly and assembly of an upper cover of a chassis and ease interference with the mounting of an external cable in the related art.

## Description

### Cross-Reference to Related Application

This invention claims priority to Chinese Patent Invention No. 202510341113.6 filed to the China National Intellectual Property Administration on March 21, 2025 and entitled "Server Case Structure", which is hereby incorporated by reference in its entirety.

### Technical Field

The present invention relates to a technical field of server cases, and in particular, to a server case structure and a server.

### Background

In modern server chassis design, an upper cover of a chassis plays a role in protecting components inside the chassis by preventing contaminants, liquids, etc. from entering the chassis. The upper cover may prevent foreign matters (e.g., particulate matters, corrosive substances, etc.) in the external environment from damaging the electrical components.

During the mounting, inspection, and maintenance of the server, the upper cover of the server chassis often needs to be assembled and disassembled. However, an existing chassis uses a threaded connection design, making it difficult to remove the upper cover during disassembly. Furthermore, it is relatively complex during assembly (e.g., a plurality of connecting screws need to be successively rotated and disassembled), and interference with the mounting of external connecting objects such as cables externally connected to the chassis easily generated, thus not facilitating rapid assembly and disassembly of the entire server.

### Summary

Some embodiments of the present invention provide a server case structure and a server, so as to at least solve the problems of inconvenient disassembly and assembly of an upper cover of a chassis and ease interference with the mounting of an external connection object such as a cable externally connected with the chassis in the related art.

According to a first aspect, the present invention provides a server case structure, including: a cover plate and a case. The cover plate and the case are fixed by means of snap-fitting, or the cover plate and the case are fixed by means of riveting, or the cover plate and the case are fixed by means of snap-fitting and riveting; at least one edge of the cover plate protrudes from the case, an edge of the cover plate which protrudes from the case is a first protruding edge, the first protruding edge is provided with an avoidance groove, and the avoidance groove penetrates through the first protruding edge; and an end portion of the case has a connection region, and the avoidance groove is provided corresponding to the connection region, a width of the avoidance groove not less than a width of the connection region.

According to a second aspect of the present invention, a server is provided and includes the above server case structure. The server further includes an expansion card and a data line. The server case structure further includes an electrical support; the electrical support includes an expansion support, and a position-avoiding groove is provided in an edge of the expansion support. The expansion card is mounted on the expansion support. One end of the data line is inserted into the expansion card, so as to connect with the expansion card. An extending direction of the position-avoiding groove is parallel to a movement direction during insertion of the data line into the expansion card.

The server case structure provided in the above technical solutions of the present invention has the following beneficial effects.

By fixing the cover plate and the case by means of snap-fitting, or the cover plate and the case are fixed by means of riveting, or the cover plate and the case are fixed by means of snap-fitting and riveting, the present invention implements the rapid disassembly and assembly of the cover plate on the case by using a simple structure. Compared to the existing design of an upper cover of a conventional server chassis in the industry using a threaded member (e.g., threaded connection), the case and the cover plate provided in the present invention both do not need to use a threaded member structure, such that production processes of the cover plate and the case may be reduced (e.g., the process of machining a threaded hole is reduced) to reduce production efficiency, and product costs may also be effectively reduced, thereby increasing product competitiveness. By providing the avoidance groove in the first protruding edge, effective avoidance of external objects such as operating tools, hands, external cables, etc. in the connection region is realized, such that the convenience of follow-up operations of inserting and removing a cable from the server case structure, mounting a device, etc. may be improved. The avoidance groove is provided corresponding to the connection region and has a width of the avoidance groove not less than a width of the connection region, such that the design rationality of the position and size of the avoidance groove and reliable avoidance of external objects are further guaranteed. The present invention is simple in structure and low in cost, solves the problems of inconvenient disassembly and assembly of an upper cover of a chassis and ease interference with the mounting of an external connection object such as a cable in the related art, and thus is convenient in assembly and subsequent maintenance and suitable for large-scale promotion and usage.

The server provided in the above technical solutions of the present invention includes the above server case structure. Therefore, the server includes at least the beneficial effects of the server case structure.

### Brief Description of the Drawings

In order to more clearly illustrate the embodiments of the present invention or the technical solutions in the related art, the drawings used in the description of the embodiments or the related art will be briefly described below. It is apparent that the drawings in the following descriptions are merely the embodiments of the present invention. Other drawings can be obtained from those skilled in the art according to the provided drawings without any creative work.
Fig. 1 illustrates a schematic diagram of an external structure of an electrical device according to an embodiment of the present invention.
Fig. 2 illustrates a partial enlarged view of part A in Fig. 1.
Fig. 3 illustrates an exploded view of a partial structure of an electrical device according to an embodiment of the present invention.
Fig. 4 illustrates a partial enlarged view of part B in Fig. 3.
Fig. 5 illustrates a schematic diagram of a partial structure of an electrical device with a cover plate removed according to an embodiment of the present invention.
Fig. 6 illustrates a partial enlarged view of part C in Fig. 5.
Fig. 7 illustrates a specific schematic diagram of a cover plate according to an embodiment of the present invention.
Fig. 8 illustrates a partial enlarged view of part D in Fig. 7.
Fig. 9 illustrates a partial enlarged view of part E in Fig. 7.
Fig. 10 illustrates a partial enlarged view of part F in Fig. 7.
Fig. 11 illustrates a schematic diagram of a specific structure of a cover plate from a top view according to an embodiment of the present invention.
Fig. 12 illustrates a partial enlarged view of part G in Fig. 11.
Fig. 13 illustrates a schematic mating diagram of an expansion card and an expansion support according to an embodiment of the present invention.
Fig. 14 illustrates a schematic diagram of a specific structure of an expansion card and an expansion support from a top view according to an embodiment of the present invention.

In the drawings:
10. Cover plate; 11. First protruding edge; 12. Avoidance groove; 13. Snap-fitting portion; 131. First support arm; 132. Second support arm; 133. Snap-fitting protrusion; 134. First gap; 135. Second gap; 136. Hollow hole; 137. Snap-fitting body; 14. Plate body; 15. First side edge body; 16. Second side edge body; 17. Extension portion; 18. Flange portion; 19. Positioning portion; 191. Vent; 192. First ventilation matrix; 193. Second ventilation matrix;
20. Case; 21. Snap-fitting groove; 211. Longitudinal extension section; 212. Horizontal extension section; 22. Opening groove; 23. Positioning groove; 24. Protective cavity; 25. Through hole; 26. Connection region;
30. Cover plate lock;
40. Expansion support; 41. Position-avoiding groove;
50. Expansion card; and
60. Data line.

### Detailed Description of the Embodiments

The technical solutions in the embodiments of the present invention will be clearly and completely described below in combination with the drawings in the embodiments of the present invention. It is apparent that the described embodiments are only part of the embodiments of the present invention, not all the embodiments. All other embodiments obtained by those of ordinary skill in the art on the basis of the embodiments in the present invention without creative work fall within the scope of protection of the present invention.

The technical solutions in the embodiments of the present invention will be clearly and completely described below in combination with the drawings in the embodiments of the present invention. It is apparent that the described embodiments are only part of the embodiments of the present invention, not all the embodiments. All other embodiments obtained by those of ordinary skill in the art on the basis of the embodiments in the present invention without creative work all fall within the scope of protection of the present invention.

It is to be noted that orientation or position relationships indicted by terms such as "center", "longitudinal", "transverse", "length", "width", "thickness", "upper", "lower", "front", "rear", "left", "right", "vertical", "horizontal", "top", "bottom", "interior", "exterior", "clockwise", "anticlockwise", "axial direction", "circumferential direction" are based on orientation or position relationships shown in the drawings, are merely to facilitate the description of the present invention and simplify the description, instead of indicating or implying that the indicated device or element must have particular orientations or be constructed and operated in particular orientations, and cannot be construed as limiting the present invention. The terms "mounted", "connected" and "connect" should be interpreted broadly. For example, the term "connect" may be fixed connection, detachable connection or integral construction. As an alternative, the term "connect" may be mechanical connection, or electrical connection. As an alternative, the term "connect" may be direct connection, or indirect connection through a medium, or communication in two elements. The terms "parallel," "vertical," and "equal" include the situations described as well as situations approximating those described, where such approximation falls within an acceptable deviation range. This acceptable deviation range is determined by those skilled in the art considering the measurement under discussion and the errors associated with measuring a specific quantity (i.e., the limitations of the measurement system). For example, "parallel" includes absolutely-parallel and approximately-parallel, where an acceptable deviation range for approximately-parallel may be, for example, within 5°; and "vertical" includes absolutely-vertical and approximately-vertical, where an acceptable deviation range for approximately-vertical may also be, for example, within 5°. "Equal" includes absolutely-equal and approximately-equal, where an acceptable deviation range for approximately-equal may be, for example, defined as a difference value between two equals being less than or equal to 5% of either one. For those of ordinary skill in the art, specific meanings of the above mentioned terms in the present invention may be understood according to a specific condition.

In order to make those skilled in the art better understand the solutions of the present invention, the present invention is further described in detail below with reference to the drawings and specific implementations.

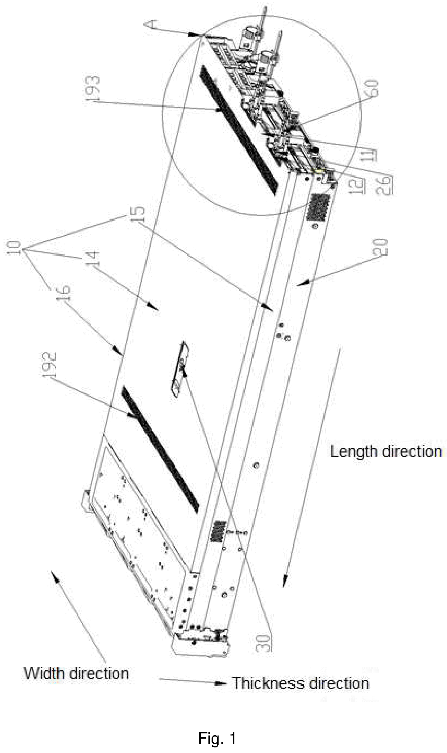

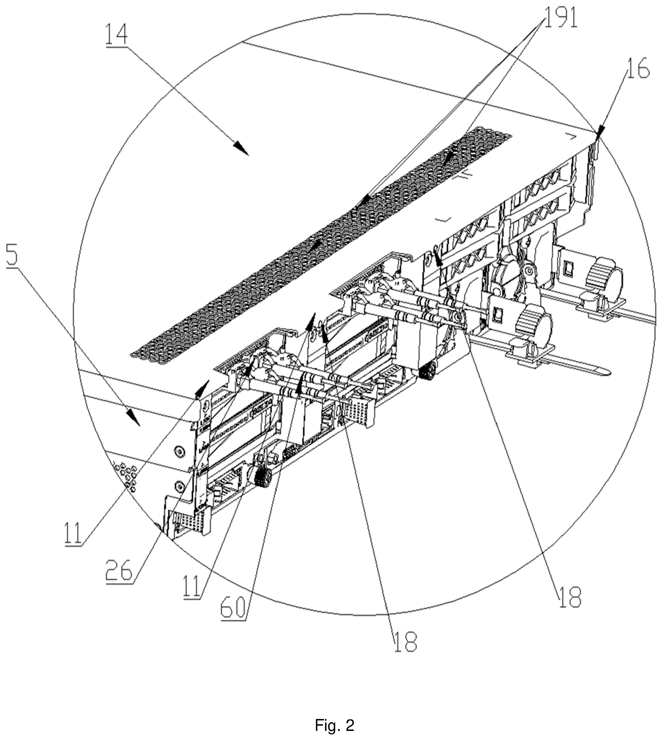

As shown in Fig. 1 to Fig. 14, an embodiment of the present invention provides a server case structure. In combination with the structure and operating principle of the server case structure, an apparatus is described in detail.

As shown in Fig. 1, Fig. 2, Fig. 3, Fig. 5, and Fig. 7, the server case structure provided in the present invention includes: a cover plate 10 and a case 20. The cover plate 10 and the case 20 are fixed in by means of snap-fitting, or the cover plate 10 and the case 20 are fixed by means of riveting, or the cover plate 10 and the case 20 are fixed by means of snap-fitting and riveting; at least one edge of the cover plate 10 protrudes from the case 20, an edge of the cover plate 10 which protrudes from the case 20 is a first protruding edge 11, the first protruding edge 11 is provided with an avoidance groove 12, and the avoidance groove 12 penetrates through the first protruding edge 11; and an end portion of the case 20 includes a connection region 26, and the avoidance groove 12 is provided corresponding to the connection region 26, a width of the avoidance groove 12 not less than a width of the connection region 26.

By fixing the cover plate 10 and the case 20 in a snap-fitting manner and/or a riveting manner, the present invention implements the rapid disassembly and assembly of the cover plate 10 on the case 20 by using a simple structure. Compared to the existing design of an upper cover of a conventional server chassis in the industry using a threaded member (e.g., threaded connection), the case 20 and the cover plate 10 provided in the present invention both do not need to use a threaded member structure, such that production processes of the cover plate 10 and the case 20 may be reduced (e.g., the process of machining a threaded hole is reduced) to reduce production efficiency, and product costs may also be effectively reduced, thereby increasing product competitiveness. By providing the avoidance groove 12 in the first protruding edge 11, effective avoidance of external objects such as operating tools, hands, external cables, etc. in the connection region 26 is realized, such that the convenience of follow-up operations of inserting and removing a cable from the server case structure, mounting a device, etc. may be improved. The avoidance groove 12 is provided corresponding to the connection region 26 and has a width not less than that of the connection region 26, such that the design rationality of the position and size of the avoidance groove 12 and reliable avoidance of external objects are further guaranteed. The present invention is simple in structure and low in cost, solves the problems of inconvenient disassembly and assembly of an upper cover of a chassis and ease interference with the mounting of an external connection object such as a cable in the related art, and thus is convenient in assembly and subsequent maintenance and suitable for large-scale promotion and usage.

It is to be noted that, the connection region 26 in the present invention is defined as a space around a server case, especially a space region in which an end portion of the case is configured to mount, insert, remove, or operate an external device and related components. This region mainly includes spaces of a data cable, expansion card, and other connecting members that need to perform operations such as data transmission, power connection, signal transmission, etc. during the operation or maintenance of a server, and a space required for hand operation when an operator performs the above operations is also taken into consideration. The arrangement of the connection region 26 is to ensure that an external object may be freely inserted, removed, or adjusted as necessary during normal operation or maintenance upgrade of the server, thereby improving the maintainability and usability of the server.

In some embodiments, the scope of the connection region 26 in the server case structure provided in the present invention includes the following considerations: 1, data line insertion and removing: an electronic device inside the server, such as a hard disk drive, a network adapter, an expansion card, etc., needs to be connected to an external device or a network by the data line. The connection region 26 needs to ensure that there is enough space when these data lines are inserted and removed, so as to avoid physical interference with the insertion and removing of the data lines by the cover plate 10. 2, expansion card mounting: the extensibility of the server is one of its important characteristics, and different application requirements are met by mounting or replacing the expansion card (e.g., Peripheral component interconnect express (PCIe)). The connection region 26 needs to reserve a physical space required for mounting the expansion card, as well as a space required for hand operations when an engineer mounts or replaces the expansion card. 3, during the maintenance or upgrade of the server, the engineer may need to perform an operation on some components by using a tool (e.g., a screwdriver or a wrench). Usage spaces for these tools are also taken into consideration in the connection region 26, so as to ensure that the cover plate 10 does not obstruct the use of the tools, thereby simplifying a maintenance process. Therefore, the division of the connection region 26 plays an important role in the design of the server case structure, which not only ensures the operability of the server during operation and maintenance, but also improves the usage efficiency and user experience of the server case. The avoidance groove 12 in the present invention is provided corresponding to the connection region 26, and has a width not less than that of the connection region 26. Such design ensures that the cover plate 10 provides a necessary protection effect while avoids the interference with various external objects in the connection region 26, thereby achieving a balance between protection and operation convenience.

In practical applications, the widths and positions of the connection region 26 and avoidance groove 12 need to be accurately designed according to the specification and internal layout of the server and user operation requirements, so as to ensure the optimization of the server case structure and reflect the design flexibility and applicability of the present invention. Definitely, this design idea is not only suitable for the server, but also may be pushed to case structures of other electronic devices in which the cables need to be frequently inserted and removed and the maintenance operation need to be frequently performed, thereby providing a new solution for improving the maintenance efficiency and user experience of the device.

The design advantage of the present invention also lies in that, by fixing the cover plate 10 and the case 20 in a snap-fitting manner, the mounting and disassembly processes of the cover plate 10 are simplified, thereby improving the maintenance efficiency of the server case structure. The design of the avoidance groove 12 ensures that an operation, when being performed in the connection region 26, such as inserting or removing the cable or mounting the device, is not obstructed by the cover plate 10, thereby improving the convenience and safety of the operation. An application scenario of the above structure includes the assembly, maintenance, and upgrade of the server, especially in a high-design server environment, this design may significantly reduce the operation difficulty of maintenance personnel in a limited space, thereby improving operation efficiency.

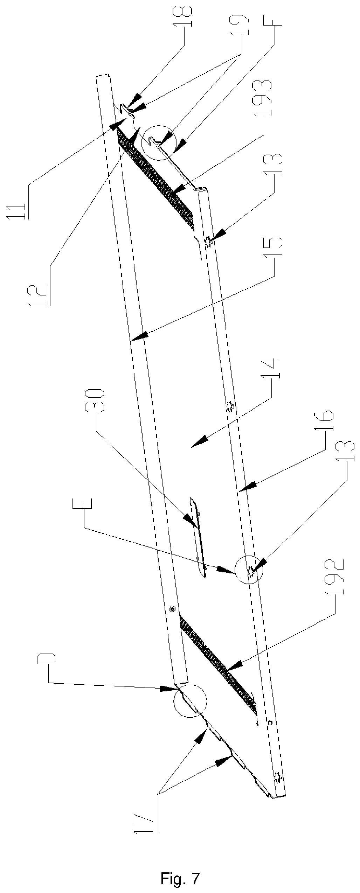

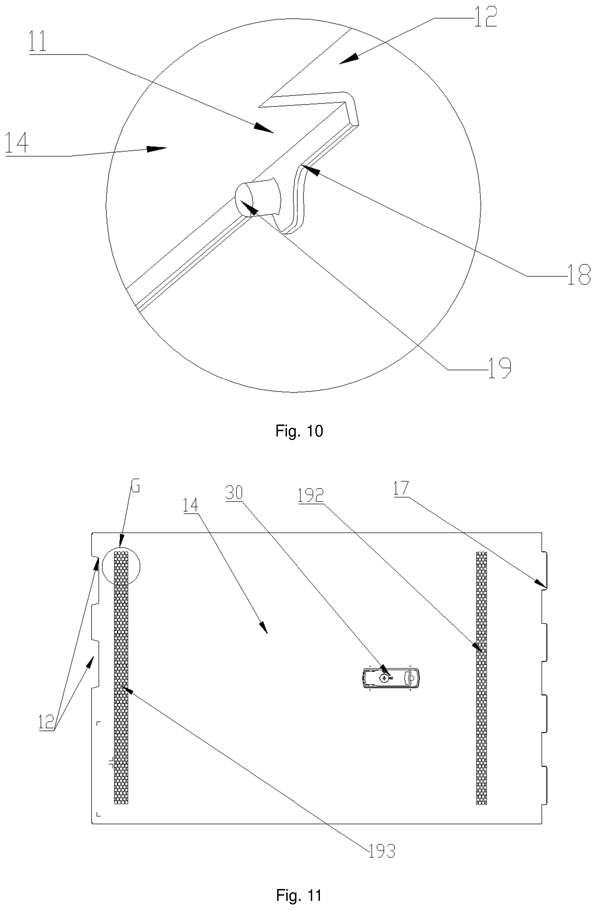

In some embodiments, as shown in Fig. 7 and Fig. 11, the avoidance groove 12 penetrates through the first protruding edge 11 in a thickness direction of the cover plate 10; or the avoidance groove 12 extends inward the cover plate 10; or the avoidance groove 12 penetrates through the first protruding edge 11 in a thickness direction of the cover plate 10; the avoidance groove 12 extends inward the cover plate 10.

In some embodiments, the avoidance groove 12 penetrates through the first protruding edge 11 in the thickness direction of the cover plate 10. This means that the shape of the avoidance groove 12 is in a through form from top to bottom, ensuring that the avoidance groove 12 is open throughout the entire thickness of the cover plate 10, such that an external object (e.g., an operating tool or a data line) conveniently passes through without contacting with the cover plate 10. Furthermore, the avoidance groove 12 may also extend inward the cover plate 10, indicating that the avoidance groove 12 forms not only on the surface but also penetrates into the first protruding edge 11, so as to provide a larger space for avoiding the external object.

In some embodiments, by designing the avoidance groove 12 into a through-type or inward-extending structure, it may ensure that, when a cable is inserted or removed or other operations are performed, the operating tool or the cable may easily pass through the avoidance groove 12, so as to avoid any physical interference with these operations by the cover plate 10. Therefore, the maintainability and usability of the server case structure are improved, and inconvenience of the server during maintenance and upgrade is also reduced, thereby causing the operations to be more intuitive and convenient.

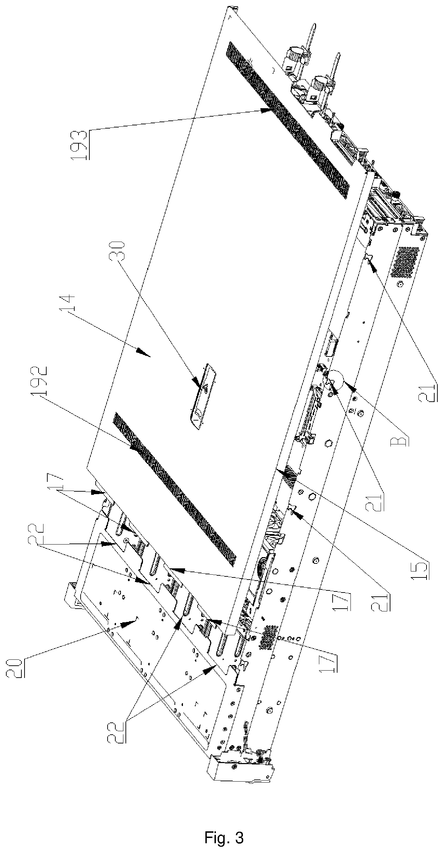

As shown in Fig. 3, Fig. 4, Fig. 5, Fig. 7, and Fig. 9, two sides of the case 20 are respectively provided with snap-fitting grooves 21 correspondingly provided; two sides of the cover plate 10 are respectively provided with snap-fitting portions 13; and a snap-fitting portion 13 at one side of the cover plate 10 is mated with the snap-fitting groove 21 at one side of the case 20 in a snap-fitting manner, and a snap-fitting portion 13 at the other side of the cover plate 10 is mated with the snap-fitting groove 21 at the other side of the case 20 in a snap-fitting manner such that the cover plate 10 and the case 20 are fixed in a snap-fitting manner.

The principle of the above snap-fitting design is to use the matching between the snap-fitting portions 13 on the two sides of the cover plate 10 and the snap-fitting grooves 21 on the two sides of the case 20, the mounting and dismantling of the cover plate 10 may be completed by a simple sliding fit operation, without using an additional fixing tool or part, such that the maintenance process of the server case structure is simplified. Moreover, the above design may realize the rapid mounting and dismantling of the cover plate 10, thereby reducing maintenance costs and improving maintenance efficiency. The primary application scenarios involve daily maintenance and upgrade of the server, particularly in situations requiring frequent removal and mounting of the cover plate 10, such as on-site maintenance and fault troubleshooting.

As shown in Fig. 1, Fig. 3, Fig. 7, and Fig. 11, the cover plate 10 comprises a plate body 14, a first side edge body 15, and a second side edge body 16; the first side edge body 15 and the second side edge body 16 are respectively correspondingly arranged on two sides of the plate body 14, and respectively protrude in a thickness direction of the plate body 14; one snap-fitting portion 13 is provided on the surface of the first side edge body 15 facing toward the second side edge body 16, and protrudes toward the second side edge body 16; the other snap-fitting portion 13 is provided on the surface of the second side edge body 16 facing toward the first side edge body 15, and protrudes toward the first side edge body 15; and the first side edge body 15 and the second side edge body 16 are respectively located outside the case 20, in a case where the cover plate 10 and the case 20 are fixed in a snap-fitting manner.

The principle of the above structure is to achieve the stable fixation of the cover plate 10 by mating the snap-fitting portions 13 on first side edge body 15 and second side edge body 16 on two sides of the cover plate 10 with the snap-fitting grooves 21 on the two sides of the case 20. Through the arrangement of the first side edge body 15 and the second side edge body 16, the structural strength of the cover plate 10 is improved to prevent deformation or damage during usage. The above design improves the mounting stability of the cover plate 10, thereby improving the protective capability of the server case structure. The application scenarios include high-load and high-vibration server environments, such as data center servers, high-performance computing servers, etc., ensuring the normal operation of the server in a harsh environment.

Furthermore, the above design also ensures the simplified structure of the cover plate 10, facilitating subsequent stamping forming and cost control.

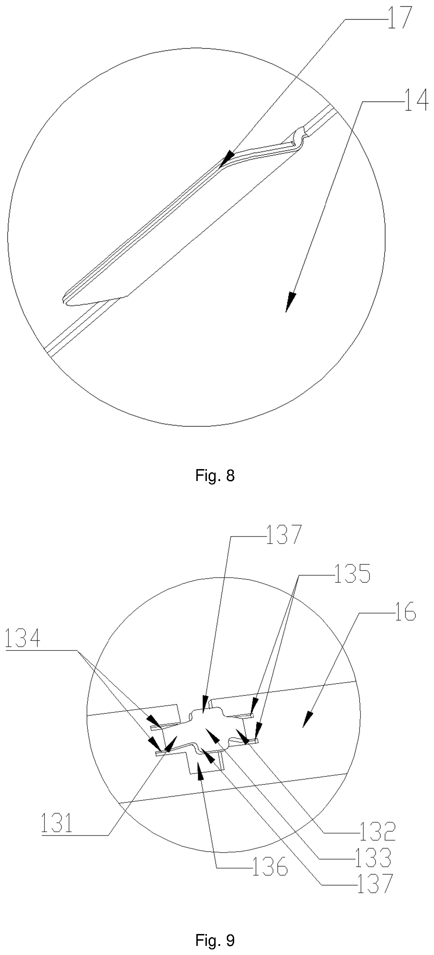

As shown in Fig. 7 and Fig. 9, the snap-fitting portion 13 includes a first support arm 131, a second support arm 132, and a snap-fitting protrusion 133; one end of the first support arm 131 is connected to the cover plate 10, and the other end is connected with one end of the snap-fitting protrusion 133; the first support arm 131 extends inward the cover plate 10; one end of the second support arm 132 is connected with the cover plate 10, and the other end is connected with the other end of the snap-fitting protrusion 133; the second support arm 132 extends inward the cover plate 10; and the snap-fitting protrusion 133 is configured to be mated with the snap-fitting groove 21 in a snap-fitting manner.

Through the supporting effect of the first support arm 131 and the second support arm 132, it ensures that the snap-fitting protrusion 133 may be stably mated with the snap-fitting groove 21 in a snap-fitting process, such that the cover plate 10 is rapidly fixed. Such arrangement improves the stability and reliability of the snap-fitting process, thereby reducing potential offset or damage to the cover plate 10 in the snap-fitting process. The primary application scenarios involve rapid assembly and disassembly of the server case structure, particularly in situations requiring frequent removal and mounting of the cover plate 10, such as on-site maintenance and upgrade.

In some embodiments, a first gap 134 is provided between the cover plate 10 and two sides of at least a portion of the first support arm 131; and/or a second gap 135 is provided between the cover plate 10 and two sides of at least a portion of the second support arm 132; the cover plate 10 is further provided with a hollow hole 136; and/or the hollow hole 136 penetrates through the cover plate 10 in the thickness direction of the cover plate 10 and corresponds to the snap-fitting protrusion 133.

The structure design in the above embodiment is to provide an enough space to accommodate the deformation of the snap-fitting portion 13, so as to ensure smooth snap-fitting between the cover plate 10 and the case 20. The arrangement of the first gap 134 and the second gap 135 and the design of the hollow hole 136 may significantly reduce the lagging probability of the snap-fitting portion 13 during the snap-fitting process, so as to ensure the rapid and stable snap-fitting between the cover plate 10 and the case 20, thereby improving the maintenance efficiency and user experience of the server case structure.

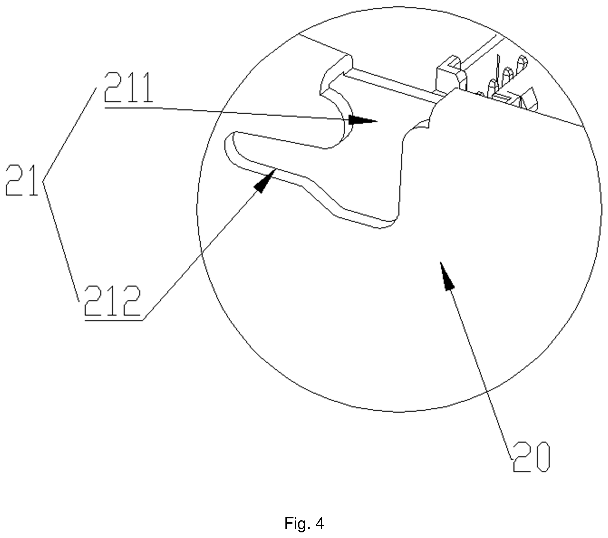

As shown in Fig. 4 and Fig. 9, the snap-fitting protrusion 133 protrudes in a thickness direction of the cover plate 10, and a protruding portion is a snap-fitting body 137; in a case where the cover plate 10 and the case 20 are fixed in a snap-fitting manner, the snap-fitting body 137 is located inside the snap-fitting groove 21 and is in limiting fit with an inner wall of the snap-fitting groove 21, so as to limit the cover plate 10 in a width direction and/or thickness direction of the cover plate 10; and the cover plate 10 covers the snap-fitting groove 21.

Through the tight mating between the snap-fitting body 137 and the inner wall of the snap-fitting groove 21, movement degrees of freedom of the cover plate 10 in the width direction and thickness direction are limited to ensure the firm fixation of the cover plate 10. The above design improves the fixing strength and stability of the cover plate 10, thereby improving the protective capability of the server case structure.

Furthermore, it is to be noted that, when the cover plate 10 and the case 20 are fixed in a snap-fitting manner, the snap-fitting body 137 is located inside a cavity of the snap-fitting groove 21 and is in limiting fit with the inner wall of the snap-fitting groove 21, and in this case, the cover plate 10 and the snap-fitting body 137 are distributed on two sides of a side wall of the snap-fitting groove 21 (i.e., the cover plate 10 is located outside an outer side surface of one side of the snap-fitting groove 21, and the snap-fitting body 137 is located inside an inner cavity of the outer side surface of the side of the snap-fitting groove 21), such that such arrangement further improves the mating strength between the snap-fitting protrusion 133 and the snap-fitting groove 21.

In some embodiments, the snap-fitting portion 13 and the cover plate 10 are integrally arranged; and/or the snap-fitting portion 13 is formed through stamping; and/or the cover plate 10 is formed through stamping.

In some embodiments, the snap-fitting portion 13 and the cover plate 10 may be integrally formed through a stamping process. Moreover, the entire cover plate 10 may also be formed through stamping, meaning that the snap-fitting portion 13 and the cover plate 10 may be integrally formed during manufacturing without additional assembly processes, thereby simplifying the production flow.

The design of integral formation and stamping formation in the above embodiment not only reduces production costs and production processes, but also improves the structural strength between the cover plate 10 and the snap-fitting portion 13, thereby reducing the risk of structural failure caused by improper assembly. The above design has important significance for improving the production efficiency and product quality of the server case structure.

As shown in Fig. 4, the snap-fitting groove 21 has a longitudinal extension section 211 and a horizontal extension section 212; an inlet is provided at a top end of the longitudinal extension section 211, and one end of the horizontal extension section 212 communicates with a bottom end of the longitudinal extension section 211; and the snap-fitting portion 13 enters the longitudinal extension section 211 from the inlet of the snap-fitting groove 21 and then enters the horizontal extension section 212, so as to fix the cover plate 10 on the case 20 in a snap-fitting manner.

Through the combination of the longitudinal extension section 211 and the horizontal extension section 212, a space for the snap-fitting portion 13 to enter and fix is provided, and a movement direction of the cover plate 10 during mounting is limited, thereby ensuring the correct mounting of the cover plate 10. Moreover, the above design simplifies the mounting process of the cover plate 10, thereby improving mounting efficiency and accuracy.

In some embodiments, as shown in Fig. 4, at least one of the inlet of the longitudinal extension section 211 or a junction between the horizontal extension section 212 and the longitudinal extension section 211 is rounded.

In some embodiments, at least one of the inlet of the longitudinal extension section 211 of the snap-fitting groove 21 or the junction between the longitudinal extension section 211 and the horizontal extension section 212 is rounded. Such design is intended to reduce hard contact and potential abrasion between the cover plate 10 and the snap-fitting groove 21 during the snap-fitting process.

The rounding treatment in the above embodiment may significantly reduce the risk of the abrasion of the cover plate 10 and the snap-fitting portion 13 during mounting and dismantling, and may also cause the snap-fitting process to be smoother to reduce operation difficulty, improving the snap-fitting experience between cover plate 10 and the case 20, thereby further prolonging the service life of the server case structure.

As shown in Fig. 3 and Fig. 7, a plurality of snap-fitting portions 13 are provided; the plurality of snap-fitting portions 13 are arranged at intervals along an extending direction of the cover plate 10; a plurality of snap-fitting grooves 21 are provided; the plurality of snap-fitting grooves 21 are arranged at intervals along an extending direction of the case 20; and at least a portion of the plurality of snap-fitting grooves 21 correspond to the plurality of snap-fitting portions 13 on a one-to-one basis.

By correspondingly providing the plurality of snap-fitting portions 13 and snap-fitting grooves 21 on the cover plate 10 and the case 20, contact points between the cover plate 10 and the case 20 are increased, such that the fixing strength and stability of the cover plate 10 are improved. Furthermore, the cover plate 10 may be fixed on the case 20 more firmly, thereby improving the mechanical properties such as protective performance, strength, rigidity, etc. of the server case structure.

As shown in Fig. 3, Fig. 5, Fig. 7, and Fig. 8, the cover plate 10 includes a plate body 14 and an extension portion 17; the extension portion 17 is provided on one end of the plate body 14 and protrudes from the plate body 14; the case 20 is provided with an opening groove 22; and in a case where the cover plate 10 and the case 20 are fixed in a snap-fitting manner, at least a portion of the extension portion 17 extends into the opening groove 22 and is in limiting fit with an inner wall of the opening groove 22, so as to restrict the cover plate 10.

The cover plate 10 is further limited to move on the case 20 through the mating between the extension portion 17 and the opening groove 22, such that a fixation effect and a positioning effect on the cover plate 10 are improved. Such arrangement causes the connection between the cover plate 10 and the case 20 to be stabler, improves the protective performance of the server case structure, and also improves the mounting accuracy of the cover plate 10 on the case body 20.

As shown in Fig. 3, Fig. 5, Fig. 7, and Fig. 8, a plurality of extension portions 17 are provided; the plurality of extension portions 17 are arranged at intervals on one end of the plate body 14; a plurality of opening grooves 22 are provided; and at least a portion of the plurality of opening grooves 22 correspond to the plurality of extension portions 17 on a one-to-one basis.

By providing the plurality of extension portions 17 on one end of the cover plate 10 and providing the plurality of corresponding opening grooves 22 in the case 20, the contact points between the cover plate 10 and the case 20 are increased, such that the fixing strength and stability of the cover plate 10 are improved. An actual usage effect is that the cover plate 10 may be fixed on the case 20 more firmly, thereby improving the overall strength of the server case structure.

As shown in Fig. 1 and Fig. 7, the plate body 14 has a thickness direction, a width direction, and a length direction, which are perpendicular to each other; the cover plate 10 further includes a first side edge body 15 and a second side edge body 16; the first side edge body 15 and the second side edge body 16 are respectively correspondingly arranged on two ends of the plate body 14 in the width direction, and respectively protrude in the thickness direction of the plate body 14; and the extension portion 17 is provided on one end of the plate body 14 in the length direction and protrudes in the length direction.

By providing the first side edge body 15 and the second side edge body 16 on the two sides of the cover plate 10 and providing the extension portion 17 on one end of the plate body 14, the structural strength and stability of the cover plate 10 are improved, and the structure also ensures the multi-angle contact and mating between the cover plate 10 and the case 20, such that the fixation effect on the cover plate 10, causing the connection between the cover plate 10 and the case 20 to be stabler, thereby improving the protective performance of the server case structure.

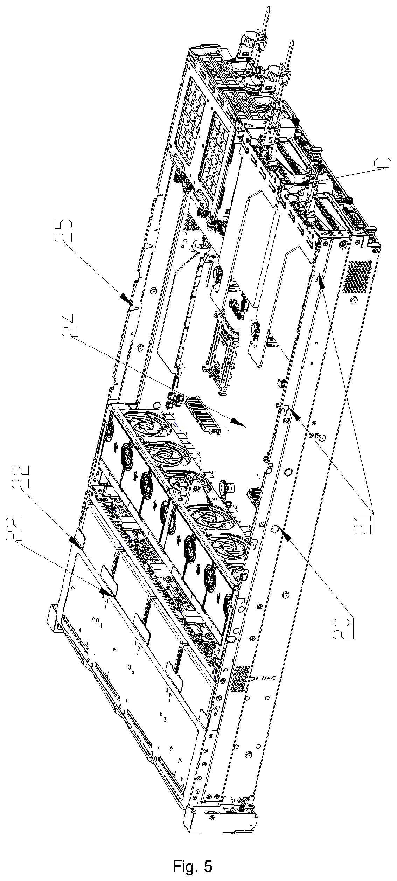

As shown in Fig. 5, Fig. 6, Fig. 7, and Fig. 10, the cover plate 10 includes a plate body (14), a flange portion 18, and a positioning portion 19; the plate body 14 has a thickness direction, a width direction, and a length direction, which are perpendicular to each other; the flange portion 18 is provided on one end of the plate body 14 in the length direction and protrudes in the thickness direction of the plate body 14; the positioning portion 19 is provided on the flange portion 18 and protrudes in the length direction; the case 20 is provided with a positioning groove 23; and in a case where the cover plate 10 and the case 20 are fixed in a snap-fitting manner, at least a portion of the positioning portion 19 extends into the positioning groove 23 and is in limiting fit with an inner wall of the positioning groove 23, so as to restrict the cover plate 10.

Through the mating between the positioning portion 19 and the positioning groove 23, the cover plate 10 is accurately positioned on the case 20, and the cover plate 10 is prevented from offsetting or shaking during usage, thereby improving the protective performance and stability of the server case structure. Moreover, the connection between the cover plate 10 and the case 20 is stabler, such that the mechanical properties of the server case structure are improved.

As shown in Fig. 7 and Fig. 10, the flange portion 18 extends in the width direction; a plurality of positioning portions 19 are provided; the plurality of positioning portions 19 are arranged at intervals on the flange portion 18 in the width direction of the plate body 14; a plurality of positioning grooves 23 are provided; and at least a portion of the plurality of positioning grooves 23 correspond to the plurality of positioning portions 19 on a one-to-one basis.

By providing the plurality of positioning portions 19 on the flange portion 18 and providing the plurality of corresponding positioning grooves 23 in the case 20, the contact points between the cover plate 10 and the case 20 are increased, such that the fixing strength and stability of the cover plate 10 are improved, and it further ensures that the cover plate 10 is accurately positioned on the case 20. The above design may cause the cover plate 10 to be able to be firmly fixed on the case 20, thereby improving the protective performance and stability of the server case structure. A practical application scenario includes daily maintenance and upgrade of the server, particularly in situations requiring the integrity and protective performance of the server case structure, such as server transportation and storage.

As shown in Fig. 7 and Fig. 10, the cover plate 10 further includes an extension portion 17, a first side edge body 15, and a second side edge body 16; the first side edge body 15 and the second side edge body 16 are respectively correspondingly arranged on two ends of the plate body 14 in the width direction, and respectively protrude in the thickness direction of the plate body 14; the extension portion 17 is provided on one end of the plate body 14 in the length direction and protrudes in the length direction; the flange portion 18 is provided on the other end of the plate body 14 in the length direction; and a protrusion direction of the positioning portion 19 is the same as a protrusion direction of the extension portion 17.

By providing the extension portion 17, the first side edge body 15, the second side edge body 16, the flange portion 18, and the positioning portion 19 on the cover plate 10, the structural strength and stability of the cover plate 10 are improved, and opportunities for multi-angle mating with the case 20 are provided, thereby improving the fixation effect and position accuracy of the cover plate 10.

As shown in Fig. 1, Fig. 3, and Fig. 5, the case 20 is internally provided with a protective cavity 24; the protective cavity 24 is configured to accommodate an electrical device; the case 20 is further provided with a through hole 25 communicating with the protective cavity 24; the cover plate 10 is detachably disposed on the case 20, and is configured to cover at least a portion of the through hole 25; and the avoidance groove 12 does not communicate with the through hole 25.

By providing the protective cavity 24 inside the case 20, a safe mounting space is provided for the electrical device, so as to prevent interference and damage to the electrical device from an external environment. The design of the through hole 25 ensures the maintainability and upgradeability of the electrical device, and the detachable arrangement of the cover plate 10 further simplifies the maintenance and disassembly and assembly processes. The design of not communicating the avoidance groove 12 with the through hole 25 ensures that a protective effect of the through hole 25 is not affected when an operation is performed in the connection region 26, such as inserting or removing the cable or mounting the device.

The above design improves the protective performance and stability of the server case structure, and also simplifies the maintenance and disassembly and assembly processes.

In some embodiments, the cover plate 10 and the case 20 are respectively projected, in the thickness direction of the cover plate 10, on the same plane perpendicular to the thickness direction of the cover plate 10; a projection of the avoidance groove 12 is spaced apart from a projection of the through hole 25; and a projection of the cover plate 10 covers at least a portion of the projection of the through hole 25.

In some embodiments, the projection of the avoidance groove 12 and the projection of the through hole 25 are spaced apart from each other on the same plane perpendicular to the thickness direction of the cover plate 10, and the projection of the cover plate 10 covers at least a portion of the projection of the through hole 25. This means that the avoidance groove 12 actually avoids a direct region of the through hole 25, but the cover plate 10 still may cover at least a portion of the through hole 25 during mounting, such that the protection for the through hole 25 is maintained while an avoidance space is provided.

Through such projection spacing design, the above embodiment skillfully solves the contradiction between protection and the operation space. Without affecting the normal usage of a passageway, the avoidance groove 12 ensures that the operating tool or cable may freely move in the space in which the avoidance groove 12 is located. Moreover, the blocking of the through hole 25 by the cover plate 10 reduces pollution and damage to internal components of the server by the external environment, thereby improving the protective capability of the entire server.

In some embodiments, the cover plate 10 has a thickness direction, a width direction, and a length direction, which are perpendicular to each other; the case 20 includes a body, a first carrier, and a second carrier; the first carrier is detachably disposed on one end of the body in the width direction, and the second carrier is detachably disposed on the other end of the body in the width direction; the snap-fitting grooves 21 are respectively provided in the first carrier and the second carrier; and the snap-fitting portions 13 are provided on the two ends of the cover plate 10 in the width direction.

In some embodiments, the first carrier and the second carrier may also designed more specifically to respectively extend in the length direction and are arranged parallel to each other. The plurality of snap-fitting portions 13 are provided; the plurality of snap-fitting portions 13 are arranged at intervals in the length direction; the plurality of snap-fitting grooves 21 are provided; the plurality of snap-fitting grooves 21 are arranged at intervals in the length direction; and at least a portion of the plurality of snap-fitting grooves 21 correspond to the plurality of snap-fitting portions 13 on a one-to-one basis.

The above snap-fitting structure design may ensure the firm fixation of the cover plate 10 in the width direction. Moreover, the stability of the cover plate 10 is further improved by providing the plurality of snap-fitting grooves 21 in the first carrier and the second carrier and providing the plurality of snap-fitting portions 13 on the cover plate 10. Such design method simplifies the mounting and disassembly processes of the cover plate 10 while improving the structural strength and stability of the entire server case structure.

Furthermore, the above design causes the snap-fitting grooves 21 to not be directly provided in the case 20, such that an improvement may be made to an existing formed chassis through the processing and forming of the first carrier and the second carrier. That is, the first carrier and the second carrier are processed and mounted on the existing chassis, such that the existing chassis may be cooperatively used with the cover plate 10 provided in the present invention.

As shown in Fig. 1, Fig. 3, and Fig. 7, the cover plate 10 is provided with a vent 191 penetrating the cover plate 10; and the vent 191 is spaced apart from the avoidance groove 12 and communicates with the through hole 25.

By providing the vent 191 in the cover plate 10, a good heat dissipation effect is provided for the server case structure to prevent the electrical device from being too hot. Moreover, through the interval arrangement of the avoidance groove 12, the impact of the vent 191 on the function of the avoidance groove 12 is avoided. The communication design of the vent 191 and the through hole 25 ensures the heat dissipation effect of the electrical device, thereby improving the stability and reliability of the server case structure.

As shown in Fig. 7, Fig. 11, and Fig. 12, the vent 191 is a regular hexagonal hole, with a side length not greater than 4.4 mm; and/or a plurality of vents 191 are provided, and the plurality of vents 191 are arranged at intervals in rows and/or in columns.

By providing the regular hexagonal vent 191, the good heat dissipation effect is guaranteed, and electromagnetic compatibility requirements are met, thereby preventing external electromagnetic interference from affecting the normal operation of the server. The design of arranging the plurality of vents 191 at intervals in rows and/or in columns further improves the heat dissipation effect, ensuring that the electrical device inside the server case structure may be operated at an appropriate temperature.

The above design improves the heat dissipation performance and electromagnetic compatibility of the server case structure, effectively prevents the electrical device from being too hot, and thus improves the stability and reliability of the server case structure. Application scenarios include the daily operation of the server, particularly in high-load and high-temperature environments such as data center servers, high-performance computing servers, etc.

As shown in Fig. 7, Fig. 11, and Fig. 12, the plurality of vents 191 are arranged at intervals in rows and/or in columns to form a first ventilation matrix 192 and a second ventilation matrix 193; the cover plate 10 has a thickness direction, a width direction, and a length direction, which are perpendicular to each other; the plurality of vents 191 in the first ventilation matrix 192 are arranged in rows in the width direction, and arranged in columns in the length direction; the plurality of vents 191 in the second ventilation matrix 193 are arranged in rows in the width direction, and arranged in columns in the length direction; and the first ventilation matrix 192 and the second ventilation matrix 193 are spaced apart in the length direction.

By arranging the first ventilation matrix 192 and the second ventilation matrix 193 on the cover plate 10, uniform distribution of heat dissipation holes in the cover plate 10 is realized, thereby improving the heat dissipation effect. Moreover, through the interval arrangement, the two ventilation matrices are prevented from being affected by each other, thereby ensuring the heat dissipation effect of each vent 191.

It is to be noted that, in the present invention, the vents 191 are designed into regular hexagons and arranged in rows and in columns. This design shows significant technical advantages and innovation points in the field of mechanics, especially in the design of the server case structure. Details are described below. 1, space utilization maximization: the regular hexagonal vent 191 may be arranged on the cover plate 10 more densely compared to circular holes. This is because the regular hexagonal holes may fill a space seamlessly, while the circular holes, due to their geometric properties, always leave a certain tangential gap between them, this results in circular holes being unable to achieve the highest density on the cover plate 10 with the same area. The close arrangement of the regular hexagonal holes means that more vents 191 may be provided within the limited area of the cover plate 10, so as to increase the area for air circulation, thereby improving the heat dissipation effect. 2, heat dissipation improvement: the dense arrangement of the vents 191 causes air circulation to be smoother, even when the server operates under high load, hot air may be rapid discharged from the regular hexagonal vents 191 of the cover plate 10, and cold air is absorbed to maintain an internal temperature of the server within a safe range, such that a fault rate of the server due to too hot is reduced, thereby prolonging the service life of the server. 3, cost-effectiveness: the high-density arrangement of the regular hexagonal holes may implement more-effective ventilation, such that when the cover plate 10 is designed, larger or more heat dissipation devices may not be required, thereby reducing material costs and production costs. Furthermore, high-efficient heat dissipation also means that the temperature of the server during operation may be better controlled to reduce energy consumption of a cooling system, thereby reducing overall operating costs. 4, electromagnetic compatibility: a side length of the regular hexagonal hole is designed to not exceed 4.4 mm to meet electromagnetic compatibility requirements, a small aperture may effectively shield against electromagnetic waves to prevent external electromagnetic interference from affecting signal transmission and data processing inside the server, thereby ensuring the stable operation of the server. In contrast, if a circular hole greater than 4.4 mm is used, the same electromagnetic shielding effect and heat dissipation effect cannot be achieved, and the regular hexagonal vent 191 provides a better solution in this regard. 5, structural strength and rigidity: the arrangement of the regular hexagonal holes not only optimizes the heat dissipation performance, but also takes the structural strength and rigidity of the cover plate 10 into consideration. Compared to the circular holes, the regular hexagonal holes form a more consecutive structure in the cover plate 10, facilitating a reduction in the deformation of the cover plate 10 during long-term usage, maintaining the flatness and integrity of the cover plate 10, thereby improving the reliability of the entire server case structure. 6, processing convenience: the stamping and forming process of the regular hexagonal holes is relatively simple, such that mass production may be realized, thereby improving production efficiency. Moreover, since the regular hexagonal holes may be closely arranged, the waste of the material of the cover plate 10 is reduced to further reduce production costs.

Therefore, the design of the regular hexagonal vents 191 in the present invention and the design of the ventilation matrices in rows and in columns are based on comprehensive consideration of factors such as space utilization, heat dissipation performance, cost control, electromagnetic compatibility, structural strength, etc. This innovative design causes the server case structure to meet an efficient heat dissipation requirement while being able to effectively control electromagnetic interference, guarantees the stability and safety of the server, and reduces the production costs, thereby reflecting the practicality and economic efficiency of the design.

Furthermore, it is to be noted that, in practical applications, by setting the distance between the first ventilation matrix 192 and the second ventilation matrix 193 and an internal fan, one of the ventilation matrices may be designed as an air inlet matrix, and the other ventilation matrix may be designed as an air outlet matrix, such that airflow of the protective cavity 24 inside the case 20 flows more rationally, thereby optimizing the airflow distribution of an internal heat dissipation wind field.

In some embodiments, the server case structure further includes a cover plate lock 30. The cover plate lock 30 is configured to lock and fix the cover plate 10 on the case 20.

In some embodiments, the server case structure further includes the cover plate lock 30, so as to lock and fix the cover plate 10 on the case 20. This means that even though the cover plate 10 and the case 20 are fixed in a snap-fitting manner, in order to further ensure the stability of the cover plate 10, the cover plate lock 30 may also be designed additionally. The addition of the cover plate lock 30 may firmly fix the cover plate 10 on the case 20 to prevent the cover plate from accidental falling during transportation or operation, and may also improve the safety of the server case structure, thereby ensuring the safety of internal components of the server.

In some embodiments, the cover plate 10 includes a thickness direction, a width direction and a length direction, and any two of the thickness direction, the width direction and the length direction are perpendicular to each other; insertion grooves are respectively correspondingly provided on the two sides of the case 20 along the width direction; the insertion grooves are L-shaped grooves, each L-shaped groove has a longitudinal mating section and a horizontal mating section, and the longitudinal mating section and the horizontal mating section communicate with each other and respectively extend in the length direction; insertion ports are provided in the ends of the longitudinal mating section and horizontal mating section along the length direction; the two sides of the cover plate 10 along the width direction respectively enter, from the corresponding insertion ports, the longitudinal mating section and the horizontal mating section; and an inner wall of the horizontal mating section along the thickness direction and an inner wall of the longitudinal mating section along the width direction together restrict the cover plate 10 such that the cover plate 10 is only able to slide along the length direction.

Through the mating between the longitudinal mating section and horizontal mating section of the L-shaped groove and the two sides of the cover plate 10, the cover plate 10 is rapidly mounted and dismantled on the case 20, and the movement of the cover plate 10 along the width direction and the thickness direction is strictly limited, thereby ensuring the stable fixation of the cover plate 10. The above simplifies the mounting and dismantling processes of the cover plate 10, improves the maintenance efficiency of the server case structure, and also ensures the stable fixation of the cover plate 10.

As shown in Fig. 1, Fig. 3, Fig. 5, Fig. 13, and Fig. 14, the server case structure further includes an electrical support, where electrical support is configured to mount an electrical device; a position-avoiding groove 41 is provided in an edge of the electrical support; the position-avoiding groove 41 is configured to avoid an object located outside the electrical support.

By providing the position-avoiding groove 41 in the edge of the electrical support, an additional space is provided for the mounting and maintenance of the electrical device, such that interference with external objects such as operating tools, hands, etc. by the electrical support during mounting and maintenance is avoided, thereby improving operation convenience and safety. Such arrangement simplifies the mounting and maintenance processes of the electrical device, and improves the maintenance efficiency and safety of the server case structure. Application scenarios include server assembly, maintenance, and upgrades, particularly in situations requiring mounting or maintenance of electrical device on the electrical support, such as on-site maintenance, fault troubleshooting, etc. of the server.

As shown in Fig. 5, Fig. 13, and Fig. 14, the electrical support includes an expansion support 40; the expansion support 40 is configured to mount an expansion card 50; and the position-avoiding groove 41 is provided in an edge of the expansion support 40.

By providing the position-avoiding groove 41 in the edge of the expansion support 40, an additional space is provided for the mounting and maintenance of the expansion card 50, such that interference with external objects such as operating tools, data lines, hands, etc. by the expansion support 40 during mounting and maintenance is avoided, thereby improving operation convenience and safety. Such arrangement simplifies the mounting and maintenance processes of the expansion card 50, and improves the maintenance efficiency and safety of the server case structure. Application scenarios include server assembly, maintenance, and upgrades, particularly in situations requiring mounting or maintenance of the expansion card 50 on the expansion support 40, such as on-site maintenance and fault troubleshooting of the server, especially during the mounting and upgrade of the expansion card 50 to improve the function or performance of the server.

In some embodiments, the position-avoiding groove 41 penetrates through the edge of the expansion support 40, and extends inward the expansion support 40.

The design of the position-avoiding groove 41 in the above embodiment ensures that the hand or tool of the operator, when inserting and removing a data line 60 or mounting the expansion card 50, may unimpededly pass through the position-avoiding groove 41 to directly operate the expansion card 50, such that the convenience and efficiency of the operations are greatly improved, and damage to the expansion support 40 is also avoided, thereby prolonging the service life of the server case structure.

It is to be noted that, In some embodiments, the server further includes the expansion card 50 and the data line 60. The server case structure further includes an electrical support; the electrical support includes the expansion support, and the position-avoiding groove 41 is provided in an edge of the expansion support 40. The expansion card 50 is mounted on the expansion support 40. One end of the data line 60 is inserted into the expansion card 50, so as to connect with the expansion card 50. An extending direction of the position-avoiding groove 41 is parallel to a movement direction during insertion of the data line 60 into the expansion card 50.

Through the design of causing the extending direction of the position-avoiding groove 41 in the above embodiment to be parallel to the movement direction during insertion of the data line 60 into the expansion card 50, an effective position-avoiding space is provided, causing the operations of the data line 60 and the expansion card 50 to be more convenient. This embodiment ensures that the data line 60 and the expansion card 50 are not obstructed by any physical barrier during operation, and the operator may insert and remove the cable or mount the expansion card more easily, such that the usability and maintenance efficiency of the electrical device are improved, potential damage risks during operation may also be reduced, and the overall performance and reliability of the electrical device are improved. The design of the above embodiment improves the extensibility of the server while optimizing the operation flows, thereby greatly improving the experience of a user when using and maintaining the server.

The specific structure and design principle of an embodiment of the present invention are not described in detail below.

Fig. 1 shows a schematic diagram of overall appearance of the server case structure. It may be seen that the server case structure is composed of the case 20 and the cover plate 10. The case 20 is internally provided with the protective cavity 24 configured to accommodate the electrical device, and the through hole 25 communicating with the protective cavity 24. The cover plate 10 is designed to be detachably disposed on the case 20 to block the through hole 25, so as to protect the electrical device from being affected by external factors. It is to be noted that, the first protruding edge 11 is provided on the edge of the cover plate 10, and the avoidance groove 12 is provided in the first protruding edge 11; and the avoidance groove 12 penetrates through the first protruding edge 11 and corresponds to the connection region 26 of the case 20, so as to avoid interference with the external objects such as the cable of the electrical device in the connection region 26, thereby ensuring operation convenience.

From the combination of Fig. 1, Fig. 3, Fig. 5, and Fig. 7, the snap-fitting fixation process of the cover plate 10 and the case 20 may be obtained. In the figures, the two sides of the case 20 are respectively provided with the snap-fitting grooves 21; each of the snap-fitting grooves 21 is an L-shaped groove and composed of the longitudinal extension section 211 and the horizontal extension section 212; and the top end of the longitudinal extension section 211 is provided with the inlet, and one end of the horizontal extension section 212 communicates with the bottom end of the longitudinal extension section 211. The two sides of the cover plate 10 are respectively provided with the snap-fitting portions 13; each of the snap-fitting portions 13 includes the first support arm 131, the second support arm 132, and the snap-fitting protrusion 133; the ends of the first support arm 131 and second support arm 132 are connected to the cover plate 10, and the other ends are connected to the snap-fitting protrusion 133; and the snap-fitting protrusion 133 is configured to be in limiting fit with the inner wall of the snap-fitting groove 21, so as to achieve the snap-fitting fixation of the cover plate 10 and the case 20. The snap-fitting protrusion 133 protrudes in the thickness direction of the cover plate 10 to form the snap-fitting body 137. When the cover plate 10 is mounted on the case 20, the snap-fitting body 137 is located inside the snap-fitting groove 21 and in limiting fit with the inner wall of the snap-fitting groove 21, such that the cover plate 10 is limited in the width direction and the thickness direction, thereby ensuring mounting stability and positioning accuracy.

Fig. 7 to Fig. 12 show structural details of the cover plate 10. The cover plate 10 is composed of the plate body 14, the first side edge body 15, and the second side edge body 16; and the first side edge body 15 and the second side edge body 16 are respectively arranged on the two ends of the plate body 14 in the width direction, and protrude in the thickness direction of the plate body 14. The extension portion 17 is provided on one end of the plate body 14 in the length direction, protrudes in the length direction, and extends into the opening groove 22 of the case 20, so as to further restrict the cover plate 10, thereby ensuring the stable mounting of the cover plate on the case 20. Furthermore, the vent 191 penetrates through the cover plate 10, is spaced apart from the avoidance groove 12, and communicates with the through hole 25. The vent 191 is a regular hexagonal hole with the side length not greater than 4.4 mm, effectively prevents electromagnetic interference, and improves the heat dissipation efficiency of the system. The plurality of vents 191 are arranged at intervals in rows and/or in columns, so as to form the first ventilation matrix 192 and the second ventilation matrix 193. The two matrices are spaced apart from each other in the length direction, such that good heat dissipation is guaranteed, and electromagnetic compatibility requirements are met.

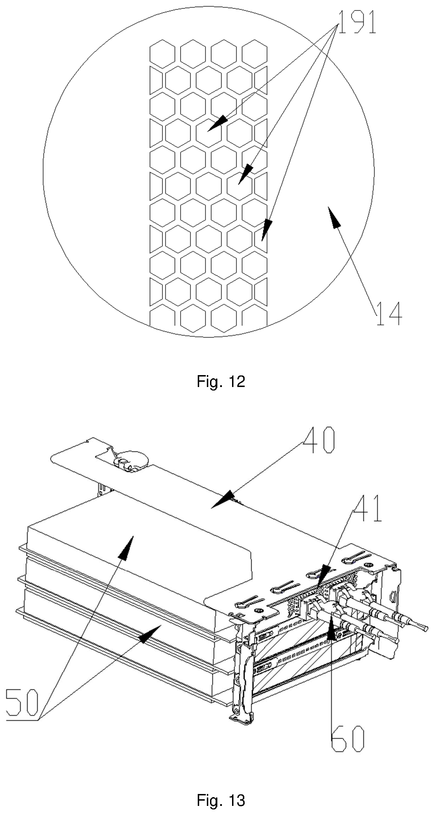

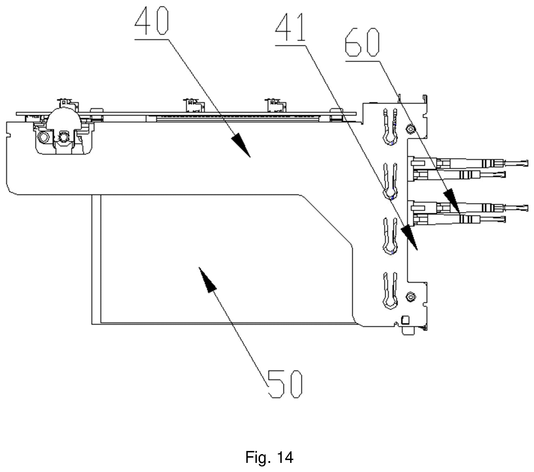

Fig. 4, Fig. 7, and Fig. 9 may be combined to show the sliding constraint design of the cover plate 10 and the case 20. The electrical support is configured to mount the electrical device, and it edge is provided with the position-avoiding groove 41; and the position-avoiding groove 41 is configured to avoid objects such as cables, heat sinks, etc. outside the electrical support, so as to ensure that the electrical device operates normally without obstruction. In some embodiments, as shown in Fig. 13 and Fig. 14, the electrical support may be further divided into a base support and the expansion support 40. The expansion support 40 is configured to mount devices such as the expansion card 50, and its edge is also provided with the position-avoiding groove 41 to adapt to mounting requirements of different devices, thereby improving the compatibility and flexibility of the system.

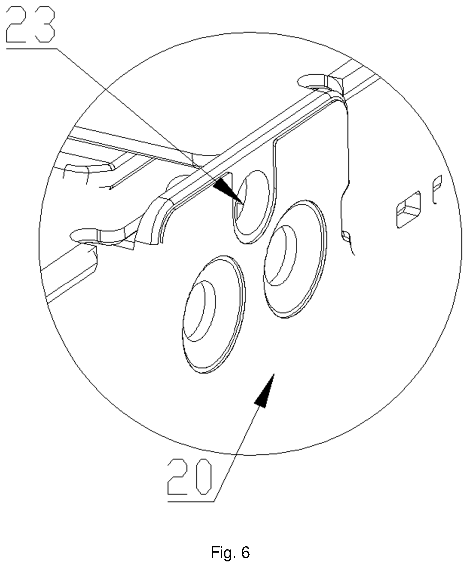

Fig. 7 and Fig. 10 show the positioning design of the cover plate 10. The cover plate 10 includes the plate body 14, the flange portion 18, and the positioning portion 19; and the plate body 14 has the thickness direction, the width direction, and the length direction, which are perpendicular to each other. The flange portion 18 is provided on one end of the plate body 14 in the length direction, and protrudes in the thickness direction of the plate body 14. The positioning portion 19 is provided on the flange portion 18, and protrudes in the length direction. As shown in Fig. 5 and Fig. 6, the case 20 is provided with the positioning groove 23. At least a portion of the positioning portion 19 extends into the positioning groove 23 and is in limiting fit with the inner wall of the positioning groove 23, so as to further restrict the cover plate 10, thereby ensuring that the cover plate is accurately and correctly positioned on the case 20. The plurality of positioning portions 19 are provided; the plurality of positioning portions 19 are arranged at intervals on the flange portion 18 in the width direction of the plate body 14; a plurality of positioning grooves 23 are also provided; and at least a portion of the plurality of positioning grooves 23 correspond to the plurality of positioning portions 19 on a one-to-one basis. Such multi-point positioning design effectively improves the stability and reliability of the cover plate 10 on the case 20.

The cover plate 10 in Fig. 7 includes the extension portion 17, the first side edge body 15 and the second side edge body 16. The extension portion 17 is provided on one end of the plate body 14 in the length direction, protrudes in the length direction, and extends into the opening groove 22 of the case 20, so as to restrict the cover plate 10. The flange portion 18 is provided on the other end in the length direction, and the protrusion direction of the positioning portion 19 is the same as the protrusion direction of the extension portion 17. Such design ensures the overall constraint and positioning of the cover plate 10 on the case 20, and improves structural stability and operation convenience.

Through the technical solutions of the above embodiments, the server case structure of the present invention achieves the simplified disassembly and assembly processes, the maintenance efficiency is improved, the mounting manner of the cover plate 10 is improved by the avoidance groove 12 and the snap-fitting fixation design, production processes are reduced, production efficiency is improved, production costs are reduced, and product competitiveness is improved. Moreover, the design of the electrical support and the position-avoiding groove of the expansion support 40 ensures the normal operation of the electrical device and improves system compatibility. Furthermore, the matrix design of the vent 191 guarantees the good heat dissipation performance, meets the electromagnetic compatibility requirements, achieves the comprehensive optimization of the server case structure in terms of heat dissipation, electromagnetic shielding, etc., improves the usability and maintainability of the server case structure, reduces maintenance costs, and thus is suitable for large-scale promotion and usage.

The server case structure provided in the present invention may be manually operated and maintained without using tools, and its structure may be suitable for server chassis with various specifications; and the entire cover plate 10 is designed without a threaded member structure. Compared to the design of an upper cover of a conventional server chassis in the industry using a threaded member (e.g., the design of disposing screws on two sides of the upper cover of the chassis for fixed connection), the entire cover plate 10 in the present invention is designed without a threaded member structure, such that production processes may be reduced, production efficiency may be improved, and product costs may also be reduced, thereby increasing product competitiveness.

By designing the cover plate lock 30 on the cover plate 10, the tool-free maintenance operations and locking functions of the cover plate 10 are achieved. The cover plate lock 30 is mated and fixed with a positioning pin on the case 20, so as to complete the fixing and locking of the cover plate 10. In practical applications, the cover plate lock 30 may be placed in a middle region of the cover plate 10, further facilitating the mounting and dismantling of the cover plate 10 by the operator.

The design of providing the regular hexagonal vents 191 in the cover plate 10 maximally increases a heat dissipation ventilation rate of the system, and reduces the power consumption and temperature of the system. The first ventilation matrix 192 located on a front end of the cover plate 10 in the length direction includes three rows of vents 191, so as to increase an air inlet volume of the system. The second ventilation matrix 193 located on a rear end of the cover plate 10 in the length direction includes four rows of vents 191, so as to increase an air outlet volume of the system. The vents 191 in the cover plate 10 also meets the electromagnetic compatibility requirements of products while improving the heat dissipation function of the system. The vent 191 may be designed as a regular hexagon with a side length of 4.4 mm.

The position-avoiding groove 41 provided in the expansion support 40 (e.g., PCIe card support) and configured to avoid data line insertion and removal operations reserves a space for the cable insertion and removal operations in a cable insertion and removal region of the server, such that the function of directly perform the cable insertion and removal operations by hands is achieved, and the usability and maintainability of the products are improved. Supports for server products in the industry typically lack this operation position-avoiding design of the position-avoiding groove 41, such that tools are usually required to insert and remove data cables at the rear and top of the product. The structural design of the position-avoiding groove 41 in the expansion support 40 improves the usability and convenience of the cable insertion and removal operations for server products, which is superior to those of the conventional server products in the industry.

To sum up, the present invention provides the server case structure and the server. In the present invention, by fixing the cover plate 10 and the case 20 in a snap-fitting manner and/or a riveting manner, the present invention implements the rapid disassembly and assembly of the cover plate 10 on the case 20 by using a simple structure. Compared to the existing design of an upper cover of a conventional server chassis in the industry using a threaded member (e.g., threaded connection), the case 20 and the cover plate 10 provided in the present invention both do not need to use a threaded member structure, such that production processes of the cover plate 10 and the case 20 may be reduced (e.g., the process of machining a threaded hole is reduced) to reduce production efficiency, and product costs may also be effectively reduced, thereby increasing product competitiveness. By providing the avoidance groove 12 in the first protruding edge 11, effective avoidance of external objects such as operating tools, hands, external cables, etc. in the connection region 26 is realized, such that the convenience of follow-up operations of inserting and removing a cable from the server case structure, mounting a device, etc. may be improved. The avoidance groove 12 is provided corresponding to the connection region 26 and has a width not less than a width of the connection region 26, such that the design rationality of the position and size of the avoidance groove 12 and reliable avoidance of external objects are further guaranteed. The present invention is simple in structure and low in cost, solves the problems of inconvenient disassembly and assembly of an upper cover of a chassis and ease interference with the mounting of an external connection object such as a cable in the related art, and thus is convenient in assembly and subsequent maintenance and suitable for large-scale promotion and usage.

It is also to be noted that relational terms such as first and second are used merely to distinguish one entity or operation from another entity or operation herein, and do not necessarily require or imply the existence of any such actual relationship or order between these entities or operations.

Each embodiment in this specification is described in a progressive manner, and each embodiment focuses on the differences from other embodiments, and the same or similar parts of each embodiment may be referred to each other.

The server case structure and server product provided in the present invention are introduced in detail above. Detailed examples are used in this specification to describe the principles and implementations of the present invention. The description of the above examples is merely used to facilitate understanding of the core idea of the present invention. It should be noted that for those of ordinary skill in the art, without departing from the principles of the present invention, several improvements and modifications may be made to the present invention, which also fall within the scope of protection of the present invention.

## Claims

1. A server case structure, comprising: a cover plate (10) and a case (20), wherein the cover plate (10) and the case (20) are fixed by means of snap-fitting, or the cover plate (10) and the case (20) are fixed by means of riveting, or the cover plate (10) and the case (20) are fixed by means of snap-fitting and riveting; at least one edge of the cover plate (10) protrudes from the case (20), an edge of the cover plate (10) which protrudes from the case (20) is a first protruding edge (11), the first protruding edge (11) is provided with an avoidance groove (12), and the avoidance groove (12) penetrates through the first protruding edge (11); a connection region (26) is disposed on an end portion of the case (20), and the avoidance groove (12) is disposed corresponding to the connection region (26), wherein a width of the avoidance groove (12) is not less than a width of the connection region (26).

2. The server case structure as claimed in claim 1, wherein two sides of the case (20) are respectively provided with snap-fitting grooves (21) correspondingly and two sides of the cover plate (10) are respectively provided with snap-fitting portions (13); and a snap-fitting portion (13) at one side of the cover plate (10) is snap-fitted to a snap-fitting groove (21) at one side of the case (20), and a snap-fitting portion (13) at the other side of the cover plate (10) is in snap-fitted to a snap-fitting groove (21) at an other side of the case (20), so that the cover plate (10) is snap-fitted and fixed with the case (20).

3. The server case structure as claimed in claim 2, wherein the cover plate (10) comprises a plate body (14), a first side edge body (15) and a second side edge body (16); the first side edge body (15) and the second side edge body (16) are respectively disposed on two sides of the plate body (14), and the first side edge body (15) and the second side edge body (16) protrude respectively along a thickness direction of the plate body (14); one snap-fitting portion (13) is disposed on a surface of the first side edge body (15) facing toward the second side edge body (16) and protrudes toward the second side edge body (16); the other snap-fitting portion (13) is disposed on a surface of the second side edge body (16) facing toward the first side edge body (15) and protrudes toward the first side edge body (15); and the first side edge body (15) and the second side edge body (16) are respectively disposed outside the case (20), in a case where the cover plate (10) is snap-fitted to the case (20).

4. The server case structure as claimed in claim 2, wherein each of the snap-fitting portions (13) comprises a first support arm (131), a second support arm (132) and a snap-fitting protrusion (133); one end of the first support arm (131) is connected with the cover plate (10), and an other end the first support arm (131) is connected with one end of the snap-fitting protrusion (133); the first support arm (131) extends inward the cover plate (10); one end of the second support arm (132) is connected with the cover plate (10), and the other end of the second support arm (132) is connected with the other end of the snap-fitting protrusion (133); the second support arm (132) extends inward the cover plate (10); and the snap-fitting protrusion (133) is configured to be snap fit with the snap-fitting groove (21).

5. The server case structure as claimed in claim 4, wherein the snap-fitting protrusion (133) protrudes along a thickness direction of the cover plate (10), and a protruding portion of the snap-fitting protrusion (133) is a snap-fitting body (137); in respond to the cover plate (10) being snap-fitted to the case (20), the snap-fitting body (137) is disposed inside the snap-fitting groove (21) and is in limiting fit with an inner wall of the snap-fitting groove (21), so as to limit the cover plate (10) in a width direction of the cover plate (10) or a thickness direction of the cover plate (10) or in a width direction and a thickness direction of the cover plate (10); and the cover plate (10) covers the snap-fitting groove (21).

6. The server case structure as claimed in claim 2, wherein the snap-fitting portion (13) and the cover plate (10) are integrally disposed; each of the snap-fitting portions (13) is formed through stamping; the cover plate (10) is formed through stamping.

7. The server case structure as claimed in claim 4, wherein a first gap (134) is disposed between the cover plate (10) and two sides of at least a portion of the first support arm (131); a second gap (135) is disposed between the cover plate (10) and two sides of at least a portion of the second support arm (132); the cover plate (10) is further provided with a hollow hole (136); and the hollow hole (136) penetrates through the cover plate (10) along a thickness direction of the cover plate (10) and corresponds to the snap-fitting protrusion (133).

8. The server case structure as claimed in claim 2, wherein the snap-fitting groove (21) comprises a longitudinal extension section (211) and a horizontal extension section (212); an inlet is disposed at a top end of the longitudinal extension section (211), and one end of the horizontal extension section (212) communicates with a bottom end of the longitudinal extension section (211); and the snap-fitting portion (13) enters the longitudinal extension section (211) from a inlet of the snap-fitting groove (21) which is corresponding to the snap-fitting portion (13), and then the snap-fitting portion (13) enters the horizontal extension section (212), so as to fix the cover plate (10) onto the case (20) in a snap-fitting manner.

9. The server case structure as claimed in claim 8, wherein at least one of a inlet of the longitudinal extension section (211) and a junction between the horizontal extension section (212) and the longitudinal extension section (211) is rounded.

10. The server case structure as claimed in claim 3, wherein a plurality of snap-fitting portions (13) are provided; the plurality of snap-fitting portions (13) are disposed at intervals along an extending direction of the cover plate (10); a plurality of snap-fitting grooves (21) are provided; the plurality of snap-fitting grooves (21) are disposed at intervals along an extending direction of the case (20); and at least a portion of the plurality of snap-fitting grooves (21) correspond to the plurality of snap-fitting portions (13) on a one-to-one basis.

11. The server case structure as claimed in claim 1, wherein the cover plate (10) comprises a plate body (14) and an extension portion (17); the extension portion (17) is disposed on one end of the plate body (14) and protrudes from the plate body (14); the case (20) is provided with an opening groove (22); and in respond to the cover plate (10) being snap-fitted to the case (20), at least a portion of the extension portion (17) extends into the opening groove (22) and is in limiting fit with an inner wall of the opening groove (22), so as to restrict the cover plate (10).

12. The server case structure as claimed in claim 11, wherein a plurality of extension portions (17) are provided; the plurality of extension portions (17) are disposed at intervals on one end of the plate body (14); a plurality of opening grooves (22) are provided; and at least a portion of the plurality of opening grooves (22) correspond to the plurality of extension portions (17) on a one-to-one basis.

13. The server case structure as claimed in claim 11, wherein the plate body (14) comprises a thickness direction, a width direction, and a length direction, and any two of the thickness direction, the width direction and the length direction are perpendicular to each other; the cover plate (10) further comprises a first side edge body (15) and a second side edge body (16); the first side edge body (15) and the second side edge body (16) are respectively correspondingly disposed on two ends of the plate body (14) in the width direction, and the first side edge body (15) and the second side edge body (16) respectively protrude along the thickness direction of the plate body (14); and the extension portion (17) is disposed on one end of the plate body (14) along the length direction and protrudes along the length direction.

14. The server case structure as claimed in claim 1, wherein the cover plate (10) comprises a plate body (14), a flange portion (18) and a positioning portion (19); the plate body (14) has a thickness direction, a width direction and a length direction, and any two of the thickness direction, the width direction and the length direction are perpendicular to each other; the flange portion (18) is disposed on one end of the plate body (14) along the length direction and protrudes along the thickness direction of the plate body (14); the positioning portion (19) is disposed on the flange portion (18) and protrudes along the length direction; the case (20) is provided with a positioning groove (23); and in a case where the cover plate (10) snap-fitted to the case (20), at least a portion of the positioning portion (19) extends into the positioning groove (23) and is in limiting fit with an inner wall of the positioning groove (23), so as to restrict the cover plate (10).

15. The server case structure as claimed in claim 14, wherein the flange portion (18) extends along the width direction of the plate body (14); a plurality of positioning portions (19) are provided; the plurality of positioning portions (19) are disposed at intervals on the flange portion (18) along the width direction of the plate body (14); a plurality of positioning grooves (23) are provided; and at least a portion of the plurality of positioning grooves (23) correspond to the plurality of positioning portions (19) on a one-to-one basis.

16. The server case structure as claimed in claim 14, wherein the cover plate (10) further comprises an extension portion (17), a first side edge body (15) and a second side edge body (16); the first side edge body (15) and the second side edge body (16) are respectively correspondingly disposed on two ends of the plate body (14) along the width direction, and the first side edge body (15) and the second side edge body (16) respectively protrude along the thickness direction of the plate body (14); the extension portion (17) is disposed on one end of the plate body (14) along the length direction and protrudes along the length direction; the flange portion (18) is disposed on the other end of the plate body (14) along the length direction; and a protrusion direction of the positioning portion (19) is the same as a protrusion direction of the extension portion (17).

17. The server case structure as claimed in claim 1, wherein the case (20) is internally provided with a protective cavity (24); the protective cavity (24) is configured to accommodate an electrical device; the case (20) is further provided with a through hole (25) which communicates with the protective cavity (24); the cover plate (10) is detachably disposed on the case (20) and is configured to cover at least a portion of the through hole (25); and the avoidance groove (12) does not communicate with the through hole (25).

18. The server case structure as claimed in claim 17, wherein the cover plate (10) is provided with a vent (191) which penetrates through the cover plate (10); and the vent (191) is spaced apart from the avoidance groove (12) and communicates with the through hole (25).

19. The server case structure as claimed in claim 17, wherein the cover plate (10) and the case (20) are respectively projected, along a thickness direction of the cover plate (10), on the same plane perpendicular to the thickness direction of the cover plate (10); a projection of the avoidance groove (12) is spaced apart from a projection of the through hole (25); and a projection of the cover plate (10) covers at least a portion of the projection of the through hole (25).

20. The server case structure as claimed in claim 2, wherein the cover plate (10) comprises a thickness direction, a width direction and a length direction, and any two of the thickness direction, the width direction and the length direction are perpendicular to each other; the case (20) comprises a body, a first carrier and a second carrier; the first carrier is detachably disposed on one end of the body along the width direction of the body, and the second carrier is detachably disposed on the other end of the body along the width direction of the body; the snap-fitting grooves (21) are respectively disposed on the first carrier and the second carrier; and the snap-fitting portions (13) are provided on the two ends of the cover plate (10) along the width direction of cover plate (10).

21. The server case structure as claimed in claim 18,
wherein the vent (191) is a regular hexagonal hole, with a side length not greater than 4.4 mm; or
wherein a plurality of vents (191) are provided, and the plurality of vents (191) are disposed at intervals in rows or in columns; or in rows and in columns; or
wherein the vent (191) is a regular hexagonal hole, and a side length not greater than 4.4 mm; a plurality of vents (191) are provided, and the plurality of vents (191) are disposed at intervals in rows or in columns; or in rows and in columns.

22. The server case structure as claimed in claim 21, wherein the plurality of vents (191) are disposed at intervals in rows and in columns to form a first ventilation matrix (192) and a second ventilation matrix (193); the cover plate (10) comprises a thickness direction, a width direction and a length direction, and any two of the thickness direction, the width direction and the length direction are perpendicular to each other; a plurality of vents (191) in the first ventilation matrix (192) are disposed in rows along the width direction and disposed in columns along the length direction; a plurality of vents (191) in the second ventilation matrix (193) are disposed in rows along the width direction and disposed in columns along the length direction; the first ventilation matrix (192) and the second ventilation matrix (193) are spaced apart along the length direction.

23. The server case structure as claimed in claim 1, further comprising a cover plate lock (30), wherein the cover plate lock (30) is configured to lock and fix the cover plate (10) on the case (20).

24. The server case structure as claimed in claim 1, wherein the cover plate (10) comprises a thickness direction, a width direction, and a length direction, and any two of the thickness direction, the width direction and the length direction are perpendicular to each other; insertion grooves are respectively correspondingly provided on the two sides of the case (20) along the width direction; each of the insertion grooves is a L-shaped groove, the L-shaped groove comprises a longitudinal mating section and a horizontal mating section, and the longitudinal mating section and the horizontal mating section communicate with each other and respectively extend along the length direction; insertion ports are disposed in the ends of the longitudinal mating section and horizontal mating section along the length direction; the two sides of the cover plate (10) along the width direction respectively enter, from the corresponding insertion ports, the longitudinal mating section and the horizontal mating section; and an inner wall of the horizontal mating section along the thickness direction and an inner wall of the longitudinal mating section along the width direction together restrict the cover plate (10) such that the cover plate (10) is only able to slide along the length direction.

25. The server case structure as claimed in claim 1, further comprising an electrical support, wherein the electrical support is configured to mount an electrical device; a position-avoiding groove (41) is disposed in an edge of the electrical support; the position-avoiding groove (41) is configured to avoid an object located outside the electrical support.

26. The server case structure as claimed in claim 25, wherein the electrical support comprises an expansion support (40); the expansion support (40) is configured to mount an expansion card (50); and the position-avoiding groove (41) is disposed in an edge of the expansion support (40).

27. The server case structure as claimed in claim 26, wherein the position-avoiding groove (41) penetrates through an edge of the expansion support (40) and extends inward the expansion support (40).

28. The server case structure as claimed in claim 1, wherein the avoidance groove (12) penetrates through the first protruding edge (11) along a thickness direction of the cover plate (10); and the avoidance groove (12) extends inward the cover plate (10).

29. A server, comprising the server case structure, the server case structure comprises a cover plate and a case, wherein the cover plate and the case are fixed by means of snap-fitting, or the cover plate and the case are fixed by means of riveting, or the cover plate and the case are fixed by means of snap-fitting and riveting; at least one edge of the cover plate protrudes from the case, a edge of the cover plate which protrudes from the case is a first protruding edge, the first protruding edge is provided with an avoidance groove, and the avoidance groove penetrates through the first protruding edge; a connection region is disposed on an end portion of the case, and the avoidance groove is disposed corresponding to the connection region, wherein a width of the avoidance groove is not less than a width of the connection region; and further comprising an expansion card (50) and a data line (60), wherein the server case structure further comprises an electrical support; the electrical support comprises an expansion support (40); and a position-avoiding groove (41) is disposed in an edge of the expansion support (40); the expansion card (50) is mounted on the expansion support (40); one end of the data line (60) is inserted into the expansion card (50), so as to connect with the expansion card (50); and an extending direction of the position-avoiding groove (41) is parallel to a movement direction during insertion of the data line (60) into the expansion card (50).
